# EUROPEAN PATENT SPECIFICATION

(11) **EP 3 490 781 B1**
(45) Date of publication and mention of the grant of the patent: **07.08.2019**
(21) Application number: 18749135.2
(22) Date of filing: 29.06.2018
(51) Int. Cl.: B29C 49/46, B29C 49/06, B29C 49/36, B29K 67/00, B29L 31/00

(54) **APPARATUS FOR MANUFACTURING STERILE CONTAINERS, BOTTLING PLANT COMPRISING SAID APPARATUS AND METHOD FOR MANUFACTURING A STERILE CONTAINER**
VORRICHTUNG ZUR HERSTELLUNG VON STERILEN BEHÄLTERN, ABFÜLLANLAGE MIT BESAGTER VORRICHTUNG UND VERFAHREN ZUR HERSTELLUNG EINES STERILEN BEHÄLTERS
APPAREIL DE FABRICATION DE RÉCIPIENTS STÉRILES, INSTALLATION D'EMBOUTEILLAGE COMPRENANT LEDIT APPAREIL ET MÉTHODE DE FABRICATION D'UN RÉCIPIENT STÉRILE

(30) Priority: 03.08.2017 IT 201700089679
(43) Date of publication of application: 05.06.2019
(73) Proprietor: Gea Procomac S.p.A., 43038 Sala Baganza (PR) (IT)
(72) Inventor: ABELLI, Paolo, 43123 Parma (IT); ANTIGA, Simone, 43013 Langhirano (Parma) (IT)
(74) Representative: Dondi, Silvia
(86) International application number: PCT/IB2018/054850
(87) International publication number: WO 2019/025881

(56) References cited:
- EP-A1- 1 122 168
- EP-A1- 2 279 850
- US-A1- 2009 071 104
- US-B1- 6 692 684
- US-B2- 8 092 757

## Description

### Technical field

The present invention relates to an apparatus for manufacturing sterile containers, a bottling plant comprising such apparatus and a method for manufacturing a sterile container.

The reference sector is the bottling of so-called "sensitive" food products, that is, products that are particularly sensitive to bacteriological contamination and oxidation, such as, for example, isotonic drinks, juices, nectars, soft drinks, tea, milk-based drinks, coffee-based drinks, etc., for which the prevention of possible microbiological contamination throughout all packaging stages is of fundamental importance.

### Background art

Packaging lines using aseptic technology are already known in the prior art, wherein the filling takes place in a controlled contamination environment and uses sterile containers, so that the bottled products can be stored for a prolonged period of time and have chemical/physical and organoleptic stability even at room temperature.

Aside from differences in design, a conventional aseptic bottling line provides for performing at least the following steps in a sterile environment:
- shaping the container, for example by stretch-blowing, starting from a parison made of thermoplastic material;
- chemical sterilization of the shaped container;
- filling and subsequently capping the filled container, so that such container is hermetically protected.

Following the aforementioned capping step, the container can be released into a non-sterile environment.

As is known, the containers leaving the blow moulding unit have a temperature comprised between 50°C and 60°C and, along the path towards the steriliser - which may be long or short - they tend to cool down.

In order to ensure the correct sterilisation of the shaped containers it is fundamental to prevent the formation of condensation on their walls, and this takes place by keeping the temperature of the containers themselves above the dew point. In this way the formation of "cold" zones, where vapours could condense, is less likely.

Document EP1858560 shows a method and apparatus configured to heat the internal walls of a container through vapour injected by penetrating nozzles.

The main limit of such solution is connected with the structural complexity and the high energy consumption.

In this context, the technical task underpinning the present invention is to provide an apparatus for manufacturing sterile containers, a bottling plant comprising such apparatus and a method for manufacturing a sterile container, which obviate the drawbacks of the prior art cited above.

In particular, it is an object of the present invention to provide an apparatus for manufacturing sterile containers and a bottling plant comprising such apparatus, having greater energy efficiency and a simplified structure and more compact with respect to known solutions. Another object of the present invention is to provide a method for manufacturing a sterile container that consumes less energy than known methods.

### Disclosure of the invention

The stated technical task and specified objects are substantially achieved by an apparatus for manufacturing sterile containers, comprising:
- a shaping unit for shaping the containers starting from parisons made of thermoplastic material;
- a sterilising unit for chemically sterilising the shaped containers by means of a sterilising agent, said sterilising unit being located downstream said shaping unit,
characterised in that it comprises:
- a first box-like case configured to delimit a first volume inside which the containers move forward during their transferral from said shaping unit to said sterilising unit;
- a first air pressurising device for pressurising the air, which is located externally of said first volume and is configured to introduce into said first volume air having pressure comprised between 1 Pa and 10 Pa, said first pressurising device comprising at least one first fan for directing the air towards the first volume and at least one first heating element configured to maintain the temperature of the pressurised air over the dew point of said sterilising agent.

Preferably, the first heating element is configured to maintain the temperature of the pressurised air between 35°C and 45°C.

Preferably, the first heating element is a coil heat exchanger.

In accordance with one embodiment, the first heating element is an electrical resistance.

For example, the first pressurising device comprises one or more air filters. Preferably, the apparatus also comprises a feedback control system for controlling the air temperature inside the first volume.

For example, the feedback control system comprises at least one first temperature sensor located inside the first volume.

The stated technical task and specified aims are substantially achieved by a bottling plant, comprising:
- the apparatus for manufacturing sterile containers, as outlined above;
- a filling unit for filling the containers, which is located downstream the sterilising unit;
- a second box-like case configured to delimit a second volume inside which the containers move forward during their transferral from the sterilising unit to the filling unit;
- a second air pressurising device for pressurising the air, which is located externally of the second volume and is configured to introduce into the second volume air having pressure comprised between 20 Pa and 35 Pa, said second pressurising device comprising at least one second fan and at least one second heating element configured to maintain the temperature of the pressurised air over the dew point of said sterilising agent.

Preferably, the bottling plant further comprises a rinsing unit for rinsing the containers, which is located inside the second volume.

Preferably, the bottling plant further comprises a third air pressurising device for pressurising the air, which is configured to introduce air having pressure comprised between 20 Pa and 35 Pa inside a controlled-contamination environment housing the filling unit.

The stated technical task and specified objects are substantially achieved by a method for manufacturing a sterile container, comprising the steps of:
- shaping the container starting from a parison made of thermoplastic material;
- chemically sterilising the shaped container by means of a sterilising agent,
characterised in that after the shaping step and before the sterilising step, the container is moved forward inside a first volume that is separated from the external environment, said first volume being subjected to an air flow having pressure comprised between 1 Pa and 10 Pa and having a temperature that is over the dew point of said sterilising agent.

### Brief description of drawings

Further characteristics and advantages of the present invention will more fully emerge from the indicative, and therefore non-limiting, description of a preferred but not exclusive embodiment of an apparatus for manufacturing sterile containers, a bottling plant comprising such apparatus and a method for manufacturing a sterile container, as illustrated in the accompanying drawings, in which:

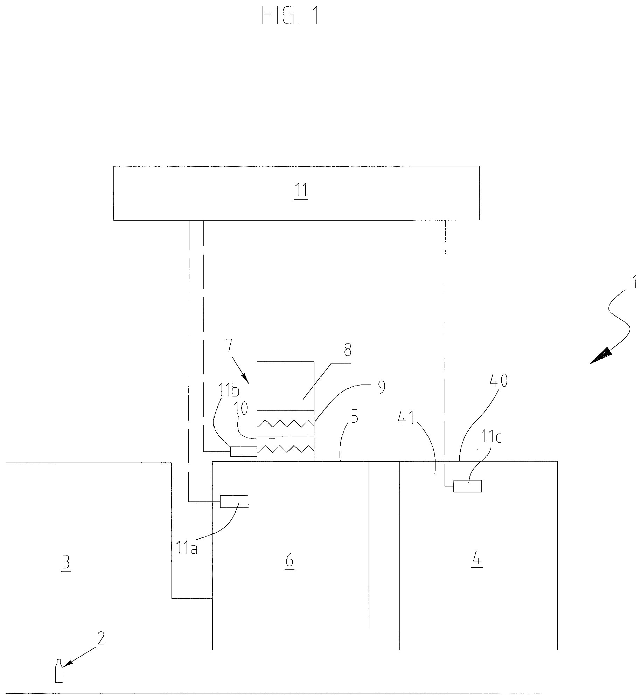

- figure 1 schematically shows an apparatus for manufacturing sterile containers according to the present invention;
- figure 2 schematically shows a bottling plant, according to the present invention.

### Detailed description of preferred embodiments of the invention

With reference to the figures, number 1 denotes an apparatus for manufacturing sterile containers 2.

The apparatus 1 comprises a shaping unit 3 for shaping the containers 2 starting from parisons made of thermoplastic material, preferably PET. Preferably, the shaping unit 3 comprises a rotating carousel bearing a plurality of shaping stations for shaping the parisons by stretch-blowing. Alternatively, the shaping unit 3 is of a linear type.

The apparatus 1 further comprises a chemical sterilising unit 4 for sterilising the shaped containers 2 by means of a sterilising agent. The sterilising unit 4 is placed downstream of the shaping unit 3.

In particular, the sterilising unit 4 is configured to chemically sterilise the containers 2 by means of hydrogen peroxide or peracetic acid. Advantageously, the apparatus 1 comprises a first box-like case 5 configured to delimit a first volume 6 inside which the containers 2 move forward during their transferral from the shaping unit 3 to the sterilising unit 4.

In particular, the containers 2 leaving the shaping unit 3 are transferred to the sterilising unit 4 through transport means (not shown) of the known type, such as one or more transfer stars, conveyor belts with related motorisation and/or grippers for picking the containers by the neck.

For example, the transport means is located inside the first volume 6. Alternatively, only a part of the transport means is situated inside the first volume 6, while the remaining part of such transport means is located outside the first volume 6. For example, the stars or belts are located inside the first volume 6, while the related motorizations are located outside the first volume 6.

Outside the first volume 6 a first air pressurising device 7 is located, which is configured to introduce into the first volume 6 air having pressure comprised between 1 Pa and 10 Pa.

Preferably, the first pressurising device 7 is mounted integrally to the first box-like case 5.

The first pressurising device 7 comprises at least one first fan 8 and at least one first heating element 9.

The fan 8 is used to direct the air into the first volume 6.

The first heating element 9 is configured to heat the pressurised air so that, once the container 2 has been introduced into the first volume 6, its temperature is maintained above the dew point of the sterilising agent. Preferably, the first heating element 9 is configured to maintain the temperature of the pressurised air between 35°C and 45°C.

Preferably, the first pressurising device 7 comprises one or more air filters 10. In particular, one or more HEPA filters are provided.

Preferably, the first heating element 9 is interposed between the first fan 8 and the filter 10 (or filters). Therefore, the air is, in order, pressurised, directed, heated and filtered before being introduced into the first volume 6.

Preferably, the first pressurising device 7 is situated on the top of the first box-like case 5 so that the hot pressurised air is introduced from the top into the first volume 6.

In accordance with one embodiment of the invention, the first heating element 9 is a coil heat exchanger. A dedicated or general source of steam feeds the coil heat exchanger through a circuit provided with an adjusting element such as, for example, a proportional opening valve. Such adjusting element is configured to introduce into the coil a predefined quantity of steam as a function of the desired temperature in the first volume 6.

In accordance with another embodiment of the invention, the first heating element 9 is an electrical resistance.

In accordance with a further embodiment of the invention, the first pressurising device 7 comprises a plurality of fans.

In accordance with a further embodiment of the invention, the first pressurising device 7 comprises a plurality of heating elements.

Preferably, the sterilising unit 4 is placed inside an isolator 40, i.e. in a box-like case configured to define a controlled contamination environment 41. The isolator 40 has the purpose of preserving the sterility of the containers 2 just sterilised by the sterilising unit 4. The first box-like case 5 and the isolator 40 of the sterilising unit 4 are contiguous and connected so as to define a single volume, i.e. in continuity.

In particular, the first volume 6 and the controlled contamination environment 41 are in fluid communication.

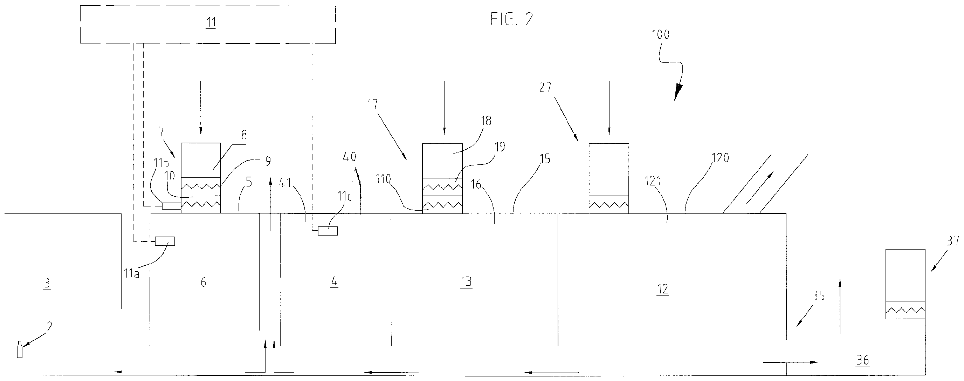

As can be noted from figure 2, between the first volume 6 and the controlled contamination environment 4 there is an intermediate zone, delimited by two walls, for evacuating the air.

Preferably, the apparatus 1 comprises a feedback control system 11 for controlling the air temperature present inside the first volume 6.

The feedback control system 11 comprises at least one first temperature sensor 11a located inside the first volume 6. In particular, in response to the temperature detected by the first temperature sensor 11a, the feedback control system 11 is configured to maintain the temperature between 35°C and 45°C.

Preferably, the feedback control system 11 also comprises other sensors. For example, it is possible to provide a second temperature sensor 11b located in proximity to the filter 10 (or the filters) of the first pressurising device 7. The presence of such second temperature sensor 11b is connected with the need to set a compatible air temperature with the operation of the filter 10.

Preferably, the feedback control system 11 also comprises a third temperature sensor 11c located on a suction conduit of the isolator 40 of the sterilising unit 4. The function of the third sensor 11c is to guarantee that the effective temperature of the containers 2 is maintained in the desired range.

Number 100 has been used to indicate a bottling plant comprising:
- the apparatus 1 for manufacturing sterile containers 2, described above;
- a filling unit 12 for filling the containers 2, which is located downstream the sterilising unit 4;
- a second box-like case 15 configured to delimit a second volume 16 inside which the containers 2 move forward during their transferral from the sterilising unit 4 to the filling unit 12.

Externally of the second volume 16 a second air pressurising device 17 is located, which is configured to introduce into the second volume 16 air having pressure comprised between 20 Pa and 35 Pa.

In particular, the second pressurising device 17 comprises at least a second fan 18 and at least a second heating element 19.

Preferably, the second heating element 19 is configured to maintain the temperature of the pressurised air between 35°C and 45°C.

Preferably, the second pressurising device 17 comprises one or more air filters 110, e.g. HEPA type filters.

Preferably, the second heating element 19 is interposed between the second fan 18 and the filter 110 (or filters). Therefore, the air is, in order, pressurised, directed, heated and filtered before being introduced into the second volume 16.

Preferably, the second pressurising device 17 is situated on the top of the second box-like case 15 so that the hot pressurised air is introduced from the top into the second volume 16.

Although being configured to set different pressures, the second pressurising device 17 is analogous to the first pressurising device 7 in terms of components and functions. Therefore, the different embodiments already described for the first pressurising device 7 are repeatable with the relevant analogies for the second pressurising device 17.

In particular, a second feedback control system is provided for controlling the air temperature (not shown) present inside the second volume 16. Thanks to the presence of the second pressurising device 17 a countercurrent air flow is created towards the controlled contamination environment 41 of the sterilising unit 4.

In accordance with one embodiment of the invention, the bottling plant 100 comprises a rinsing unit 13 for rinsing the containers 2 located inside the second volume 16.

Preferably, the sterilising unit 12 is provided with an isolator 120 adapted to define a controlled contamination environment 121.

The second box-like case 15 and the isolator 120 of the filling unit 12 are connected so as to define a single volume, i.e. in continuity.

In particular, the second volume 16 and the controlled contamination environment 121 are in fluid communication.

In accordance with one embodiment of the invention, a third air pressurising device 27 is also provided for pressurising the air, which is configured to introduce air having pressure between 20 Pa and 35 Pa inside the controlled-contamination environment 121 housing the filling unit 12.

Although being configured to set different pressures, the third pressurising device 27 is also analogous to the first pressurising device 7 in terms of components and functions. Therefore, the different embodiments already described for the first pressurising device 7 are repeatable with the relevant analogies for the third pressurising device 27.

Preferably, downstream the filling unit 12 a further volume 36 is provided into which the filled containers 2 move forward, which is protected by a further box-like case 35 provided with a further air pressurising device 37. Downstream such further volume 36 a capping unit (not shown) is located. From the above description, the characteristics of the apparatus for manufacturing sterile containers, the bottling plant comprising such apparatus and the method for manufacturing a sterile container, according to the present invention, are clear, as are the advantages.

In particular, the energy required to keep the containers hot is lower with respect to the known solutions thanks to the fact that the transit volume of the containers leaving the shaping unit towards the sterilising unit has been delimited and a pressurising device has been provided for introducing hot pressurised air only into such confined volume.

The structure is decisively simpler than known solutions, as it only requires the confinement of the zone to be kept hot (confinement performed through the first box-like case).

The confinement of the transit volume of the containers and the introduction of hot pressurised air inside it is also replicable in other operating zones of the plant: for example, between the steriliser and the filler, at the filler itself, between the filler and the capper.

## Claims

1. Apparatus (1) for manufacturing sterile containers (2), comprising:
a shaping unit (3) for shaping the containers (2) starting from parisons made of thermoplastic material;
a sterilising unit (4) for chemically sterilising the shaped containers (2) by means of a sterilising agent, said sterilising unit (4) being located downstream said shaping unit (3),
**characterised in that** it comprises:
a first box-like case (5) configured to delimit a first volume (6) inside which the containers (2) move forward during their transferral from said shaping unit (3) to said sterilising unit (4);
a first air pressurising device (7) for pressurising the air, which is located externally of said first volume (6) and is configured to introduce therein air having pressure comprised between 1 Pa and 10 Pa, said first air pressurising device (7) comprising at least one first fan (8) for directing the air towards the first volume (6) and at least one first heating element (9) configured to maintain the temperature of the pressurised air over the dew temperature of said sterilising agent.

2. Apparatus (1) according to claim 1, wherein said first heating element (9) is configured to maintain the temperature of the pressurised air between 35°C and 45°C.

3. Apparatus (1) according to claim 1 or 2, wherein said first heating element (9) is a coil heat exchanger.

4. Apparatus (1) according to claim 1 or 2, wherein said first heating element (9) is an electrical resistance.

5. Apparatus (1) according to any of the preceding claims, wherein said first air pressurising device (7) further comprises one or more air filters (10).

6. Apparatus (1) according to any of the preceding claims, further comprising a feedback control system (11) for controlling the air temperature inside said first volume (6).

7. Apparatus (1) according to claim 6, wherein said feedback control system (11) comprises at least one first temperature sensor (11a) located inside said first volume (6).

8. Bottling plant (100) comprising:
an apparatus (1) for manufacturing sterile containers (2) according to any of the preceding claims;
a filling unit (12) for filling the containers (2), which is located downstream said sterilising unit (4);
a second box-like case (15) configured to delimit a second volume (16) inside which the containers (2) move forward during their transferral from said sterilising unit (4) to said filling unit (12);
a second air pressurising device (17) for pressurising the air, which is located externally of said second volume (16) and is configured to introduce therein air having pressure comprised between 20 Pa and 35 Pa, said second air pressurising device (17) comprising at least a second fan (18) and at least a second heating element (19) configured to maintain the temperature of the pressurised air over the dew point of said sterilising agent.

9. Bottling plant (100) according to claim 8, further comprising a rinsing unit (13) for rinsing the containers (2), which is located inside said second volume (16).

10. Bottling plant (100) according to claim 8 or 9, further comprising a third air pressurising device (27) for pressurising the air, which is configured to introduce air having pressure comprised between 20 Pa and 35 Pa inside a controlled-contamination environment (121) housing said filling unit (12).

11. Method for manufacturing a sterile container (2), comprising the steps of:
shaping the container (2) starting from a parison made of thermoplastic material;
chemically sterilising the shaped container (2) by means of a sterilising agent,
**characterised in that** after the step of shaping and before the step of sterilising, the container (2) move forward inside a first volume (6) that is separated from the external environment, said first volume (6) being subjected to an air flow having pressure comprised between 1 Pa and 10 Pa and having a temperature that is over the dew point of said sterilising agent.

## Patentansprüche

1. Vorrichtung (1) zur Herstellung von sterilen Behältern (2), umfassend:
eine Formungseinheit (3) zum Formen der Behälter (2) ausgehend von Vorformlingen aus thermoplastischem Material;
eine Sterilisationseinheit (4) zum chemischen Sterilisieren der geformten Behälter (2) mittels eines Sterilisationsmittels, wobei sich die Sterilisationseinheit (4) stromabwärts der Formungseinheit (3) befindet, **dadurch gekennzeichnet, dass** sie umfasst:
ein erstes kastenartiges Gehäuse (5), das konfiguriert ist, um ein erstes Volumen (6) abzugrenzen, in dem sich die Behälter (2) während ihres Transfers von der Formungseinheit (3) zu der Sterilisationseinheit (4) vorwärtsbewegen;
eine erste Luftdruckbeaufschlagungsvorrichtung (7) zur Druckbeaufschlagung von Luft, die sich außerhalb des ersten Volumens (6) befindet und dazu konfiguriert ist, um Luft mit einem Druck zwischen 1 Pa und 10 Pa darin einzuleiten, wobei die erste Luftdruckbeaufschlagungsvorrichtung (7) mindestens ein erstes Gebläse (8) zum Leiten der Luft in Richtung des ersten Volumens (6) und mindestens ein erstes Heizelement (9) umfasst, das konfiguriert ist, um die Temperatur der Druckluft über der Tautemperatur des Sterilisationsmittels zu behalten.

2. Vorrichtung (1) nach Anspruch 1, wobei das erste Heizelement (9) konfiguriert ist, um die Temperatur der Druckluft zwischen 35 °C und 45 °C zu behalten.

3. Vorrichtung (1) nach Anspruch 1 oder 2, wobei das erste Heizelement (9) ein Wendelwärmetauscher ist.

4. Vorrichtung (1) nach Anspruch 1 oder 2, wobei das erste Heizelement (9) ein elektrischer Widerstand ist.

5. Vorrichtung (1) nach einem der vorhergehenden Ansprüche, wobei die erste Luftdruckbeaufschlagungsvorrichtung (7) zudem einen oder mehrere Luftfilter (10) umfasst.

6. Vorrichtung (1) nach einem der vorhergehenden Ansprüche, umfassend zudem ein Rückkopplungssteuersystem (11) zum Steuern der Lufttemperatur innerhalb des ersten Volumens (6).

7. Vorrichtung (1) nach Anspruch 6, wobei das Rückkopplungssteuersystem (11) mindestens einen ersten Temperatursensor (11a) umfasst, der sich innerhalb des ersten Volumens (6) befindet.

8. Abfüllanlage (100) umfassend:
eine Vorrichtung (1) zum Herstellen von sterilen Behältern (2) nach einem der vorhergehenden Ansprüche;
eine Befülleinheit (12) zum Befüllen der Behälter (2), die sich stromabwärts der Sterilisationseinheit (4) befindet;
ein zweites kastenartiges Gehäuse (15), das konfiguriert ist, um ein zweites Volumen (16) abzugrenzen, in dem sich die Behälter (2) während ihres Transfers von der Sterilisationseinheit (4) zu der Befülleinheit (12) vorwärtsbewegen;
eine zweite Luftdruckbeaufschlagungsvorrichtung (17) zur Druckbeaufschlagung von Luft, die sich außerhalb des zweiten Volumens (16) befindet und dazu konfiguriert ist, um Luft mit einem Druck zwischen 20 Pa und 35 Pa darin einzuleiten, wobei die zweite Luftdruckbeaufschlagungsvorrichtung (17) mindestens ein zweites Gebläse (18) und mindestens ein zweites Heizelement (19) umfasst, das konfiguriert ist, um die Temperatur der Druckluft über dem Taupunkt des Sterilisationsmittels zu behalten.

9. Abfüllanlage (100) nach Anspruch 8, umfassend zudem eine Spüleinheit (13) zum Spülen der Behälter (2), die sich innerhalb des zweiten Volumens (16) befindet.

10. Abfüllanlage (100) nach Anspruch 8 oder 9, umfassend zudem eine dritte Luftdruckbeaufschlagungsvorrichtung (27) zur Druckbeaufschlagung von Luft, die konfiguriert ist, um Luft mit einem Druck zwischen 20 Pa und 35 Pa in eine kontaminationskontrollierte Umgebung (121) einzuleiten, die die Befülleinheit (12) unterbringt.

11. Verfahren zur Herstellung eines sterilen Behälters (2), umfassend die Schritte:
Formen des Behälters (2) ausgehend von einem Vorformling aus thermoplastischem Material;
chemisches Sterilisieren des geformten Behälters (2) mittels eines Sterilisationsmittels,
**dadurch gekennzeichnet, dass** sich der Behälter (2) nach dem Schritt zum Formen und vor dem Schritt zum Sterilisieren innerhalb eines ersten Volumens (6), das von der äußeren Umgebung getrennt ist, vorwärtsbewegt, wobei das erste Volumen (6) einem Luftstrom aufweisend einen Druck zwischen 1 Pa und 10 Pa und aufweisend eine Temperatur, die über dem Taupunkt des Sterilisationsmittels liegt, ausgesetzt ist.

## Revendications

1. Appareil (1) de fabrication de récipients stériles (2), comprenant :
une unité de façonnage (3) pour façonner les récipients (2) à partir de paraisons constituées de matière thermoplastique ;
une unité de stérilisation (4) pour chimiquement stériliser les récipients (2) façonnés au moyen d'un agent stérilisant, ladite unité de stérilisation (4) étant située en aval de ladite unité de façonnage (3), **caractérisé en ce qu'**il comprend :
un premier coffre (5) en forme de boîte configuré pour délimiter un premier volume (6) à l'intérieur duquel les récipients (2) se déplacent vers l'avant pendant leur transfert de ladite unité de façonnage (3) à ladite unité de stérilisation (4) ;
un premier dispositif (7) de compression d'air, pour comprimer l'air, étant situé à l'extérieur dudit premier volume (6) et étant configuré pour introduire en son sein de l'air ayant une pression comprise entre 1 et 10 Pa, ledit premier dispositif (7) de compression d'air comprenant au moins un premier ventilateur (8) pour orienter l'air vers le premier volume (6) et au moins un premier élément de chauffage (9) configuré pour maintenir la température de l'air comprimé au-dessus du point de rosée dudit agent stérilisant.

2. Appareil (1) selon la revendication 1, dans lequel ledit premier élément de chauffage (9) est configuré pour maintenir la température de l'air comprimé entre 35 et 45 °C.

3. Appareil (1) selon la revendication 1 ou 2, dans lequel ledit premier élément de chauffage (9) est un échangeur de chaleur à serpentin.

4. Appareil (1) selon la revendication 1 ou 2, dans lequel ledit premier élément de chauffage (9) est une résistance électrique.

5. Appareil (1) selon l'une quelconque des revendications précédentes, dans lequel ledit premier dispositif (7) de compression d'air comprend de plus un ou plusieurs filtres à air (10).

6. Appareil (1) selon l'une quelconque des revendications précédentes, comprenant de plus un système asservi (11) de contrôle de la température de l'air à l'intérieur dudit premier volume (6).

7. Appareil (1) selon la revendication 6, dans lequel ledit système asservi (11) comprend au moins un premier détecteur de température (11a) situé à l'intérieur dudit premier volume (6).

8. Installation d'embouteillage (100) comprenant :
un appareil (1) de fabrication de récipients stériles (2) selon l'une quelconque des revendications précédentes ;
une unité de remplissage (12), servant à remplir les récipients (2), étant située en aval de ladite unité de stérilisation (4) ;
un second coffre (15) en forme de boîte configuré pour délimiter un second volume (16) à l'intérieur duquel les récipients (2) se déplacent vers l'avant pendant leur transfert de ladite unité de stérilisation (4) à ladite unité de remplissage (12) ;
un second dispositif (17) de compression d'air, pour comprimer l'air, étant situé à l'extérieur dudit second volume (16) et étant configuré pour introduire en son sein de l'air ayant une pression comprise entre 20 et 35 Pa, ledit second dispositif (17) de compression d'air comprenant au moins un second ventilateur (18) et au moins un second élément de chauffage (19) configuré pour maintenir la température de l'air comprimé au-dessus du point de rosée dudit agent stérilisant.

9. Installation d'embouteillage (100) selon la revendication 8, comprenant de plus une unité de rinçage (13), servant à rincer les récipients (2), étant située à l'intérieur dudit second volume (16).

10. Installation d'embouteillage (100) selon la revendication 8 ou 9, comprenant de plus un troisième dispositif (27) de compression d'air, servant à comprimer l'air, étant configuré pour introduire de l'air ayant une pression comprise entre 20 et 35 Pa à l'intérieur d'un environnement à contamination contrôlée (121) logeant ladite unité de remplissage (12).

11. Procédé de fabrication d'un récipient stérile (2), comprenant les étapes de :
façonner le récipient (2) à partir d'une paraison constituée de matière thermoplastique ;
stériliser chimiquement le récipient (2) façonné au moyen d'un agent stérilisant,
**caractérisé en ce qu'**après l'étape de façonnage et avant l'étape de stérilisation, le récipient (2) se déplace vers l'avant à l'intérieur d'un premier volume (6) étant séparé de l'environnement extérieur, ledit premier volume (6) étant soumis à un flux d'air ayant une pression comprise entre 1 et 10 Pa et ayant une température étant supérieure au point de rosée dudit agent stérilisant.
